# EUROPEAN PATENT SPECIFICATION

(11) **EP 1 382 866 B1**
(45) Date of publication and mention of the grant of the patent: **10.03.2010**
(21) Application number: 03016067.5
(22) Date of filing: 15.07.2003
(51) Int. Cl.: F16C 9/04

(54) **Connecting rod with a split rod-eye**
Pleuel mit einem geteilten Pleuelstangenkopf
Bielle à tête fracturée

(30) Priority: 16.07.2002 JP 2002206522
(43) Date of publication of application: 21.01.2004
(73) Proprietor: Yamaha Hatsudoki Kabushiki Kaisha, Iwata-shi, Shizuoka-ken (JP)
(72) Inventor: Kubota, Tsuyoshi, Iwata-shi, Shizuoka-ken (JP); Iwasaki, Shinya, Iwata-shi, Shizuoka-ken (JP); Isobe, Tsuneo, Iwata-shi, Shizuoka-ken (JP)
(74) Representative: Grünecker, Kinkeldey, Stockmair & Schwanhäusser Anwaltssozietät

(56) References cited:
- US-A- 5 536 089

## Description

The present invention relates to a connecting rod according to the preamble part of the independent claim 1, to a method for producing a connecting rod, and to an engine with such a connecting rod.

From US-A-5 536 089 a connecting rod as indicated above is know.

In particular, a fracture split constitution of a connecting rod is known in which the big end treated for surface hardening is fracture split into a rod part and a cap part, and the rod part and the cap part are joined together in the state of the fracture split surfaces positioned to each other.

The split type of connecting rod is generally arranged to enhance the accuracy of positioning the rod part and the cap part to secure circular or cylindrical accuracy of the big end after it is assembled to the crankshaft. That is to say, the positioning accuracy of the rod part and the cap part decides the circular accuracy of the crankpin hole when the crankshaft is attached, and it may further influence the wear and seizure of the big end and output power loss.

One of the conventional methods of enhancing the positioning accuracy of the rod part and the cap part is to form integrally the rod part and the cap part, fracture split the integral part into the rod part and cap part, and position them to each other using the fracture split surfaces of the two parts.

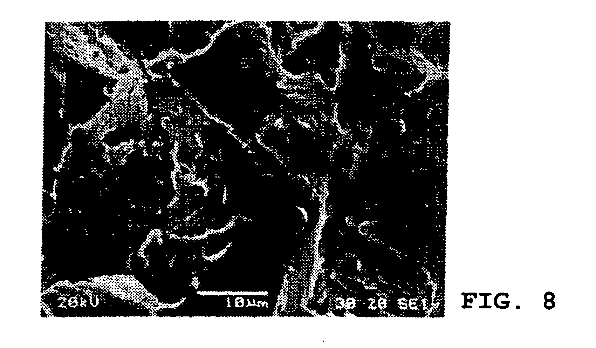

In the above case in which the positioning is made using the fracture split surfaces, the positioning accuracy is affected with the shape of the fracture split surfaces both microscopically and macroscopically. For example, in the case that the entire fracture surface of a high carbon material is heat treated by quenching, as shown in FIG. 8, the fracture split surfaces is likely to develop microscopic fracture along the grain boundary, the fractured surface is flat, and so it is hard to obtain intended positioning accuracy. Therefore, it has been a common practice to enhance the positioning accuracy by making plural separation assisting holes in zigzag positions in part of the big end to be fracture split, thereby making the fracture split surfaces macroscopically irregular (as disclosed in a laid-open Japanese patent publication, Tokkai Sho 58-37310).

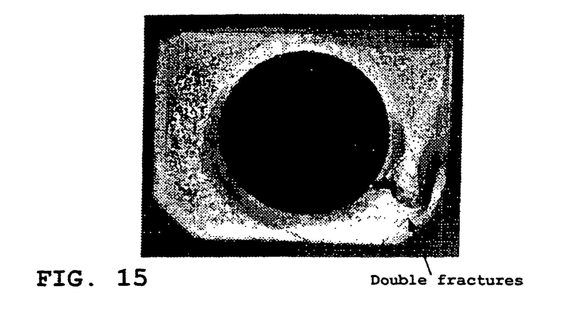

When the big end of a connecting rod is fracture split, in some cases, double fractures occur as shown in FIG. 15. Such double fractures are likely to cause tiny fractions of the fracture split surfaces to come off, mix into engine oil, and damage other components. To prevent such fractions from coming off, there has been a conventional method of fracture splitting the big end using a jig, in which the fracture splitting force is concentrated on a point on the inside surface of the big end and the separation is made by starting from that point.

However, the arrangement of making the conventional separation assisting holes In zigzag positions requires a hole making process of a high accuracy, which leads to the problem of increase in the production cost.

On the other hand, when the big end is fracture split into the rod part and the cap part after applying a surface hardening treatment to the connecting rod, in some cases, the shape of the crankpin hole on the cap part side deforms to expand at the time of the separation. Such a deformation of the cap part lowers the circular accuracy necessary for attaching the crankshaft and in extreme cases the crankshaft might not be attached at all.

When the above method is used in which the fracture splitting force is concentrated with the conventional jig on a point of the big end, the jig needs to be complicated in shape and a high accuracy is required, which leads to the problem of increased cost.

In view of the above, it is an objective of the present invention to improve a connecting rod as indicated above so as to enable enhanced positioning accuracy of positioning the parts of the big end of the connecting rod and to prevent double fractures.

This objective is solved according to the present invention by a connecting rods according to claim 1.

With the above invented connecting rod, there is provided a fracture split constitution or the connecting rod that makes it possible to enhance the accuracy of positioning the fracture split surfaces relative to each other without increasing the production cost, to improve attachment accuracy by preventing deformation of the cap part at the time of fracture splitting, and to prevent the double fractures from occurring without inviting increase in the production cost.

Therein, the hardened surface layers may be formed on an inside round surface of the bolt insertion hole and on an outside surface of the big end, said outside surface being either a surface of a crankpin hole formed in the big end or an outside wall of a shoulder part of the big end.

According to the invention, a wall thickness between a surface of the bolt insertion hole and said outside surface is set smaller than twice the thickness of the hardened surface layer.

Therein, a wall thickness between the bolt insertion hole and the other outside surface may be set larger than twice the thickness of the hardened surface layer.

Preferably, the connecting rod further comprises at least one fracture starting groove, wherein said fracture starting groove is provided along a predetermined fracture surface of the rod part and the cap part.

Further preferably, the hardened surface layer is produced by case hardening followed by tempering without applying carbon preventing treatment to those surfaces.

Still further preferably, a carbon content of the hardened surface layer is greater than a carbon content of the base metal.

Yet further preferably, the hardened surface layer has grain boundary fracture surfaces caused by the fracture split and at least part of the big end with the hardened surface layer has elongation fracture surfaces caused by the fracture split.

Still, it is also beneficial if the entire connecting rod is made of carbon steel or case hardening steel.
It is a further objective of the present invention to provide an engine with such a connecting rod which restricts costs from increasing.

The objective above is solved by an engine, in particular an internal combustion engine, comprising at least one connecting rod having the features of the embodiments discussed above.

It is a further objective of the present invention to provide a method for producing a connecting rod with improved accuracy without increasing costs.

This objective is solved according to the present invention by a method according to claim 11.

In the following, the present invention is explained in greater detail with respect to several embodiments thereof in conjunction with the accompanying drawings, wherein:
- FIG. 1: is a drawing partially in section for explaining the fracture split constitution of a connecting rod as an embodiment;
- FIG. 2: is a front view of the big end in a half-finished state;
- FIG. 3: shows the section III-III of FIG. 2 illustrating a fracture split surface of the big end,
- FIG. 4: is a diagram of producing the connecting rod;
- FIG. 5: is a characteristic diagram of the relationship between the area rate of the elongation fracture surface and the circular accuracy of the big end at the time of reassembly;
- FIG. 6: is a picture of grain boundary fracture surfaces of the big end;
- FIG. 7: is a picture of elongation fracture surfaces of the big end;
- FIG. 8: is a picture of conventional grain boundary fracture surfaces;
- FIG. 9: is a drawing partially in section for explaining the fracture split constitution of a connecting rod as a further embodiment;
- FIG. 10: is a drawing for explaining the method of fracture splitting the big end;
- FIG. 11: shows the section XI-XI in FIG. 10 for explaining the method of fracture splitting;
- FIG. 12: is a drawing of the big end in section for explaining the fracture split constitution of a connecting rod as a further embodiment, not being part of the present invention.
- FIG. 13: is a drawing of the big end in section for explaining the fracture split constitution of a connecting rod as a further embodiment;
- FIG. 14: shows a fracture split surface according to the above embodiment; and
- FIG. 15: shows a fracture split surface in a conventional arrangement;

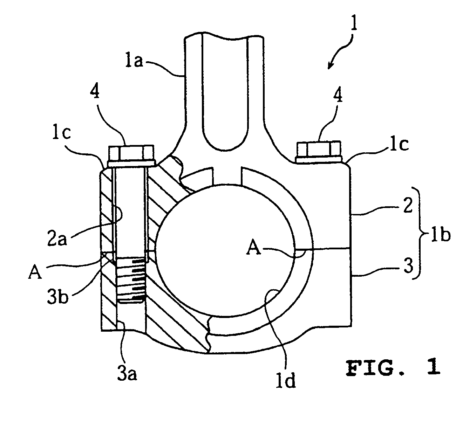

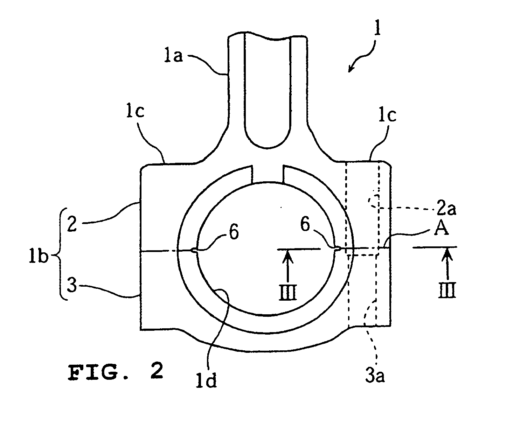

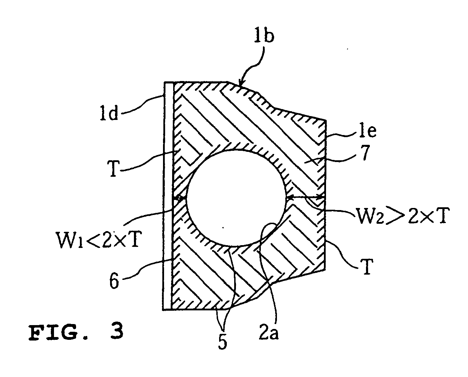

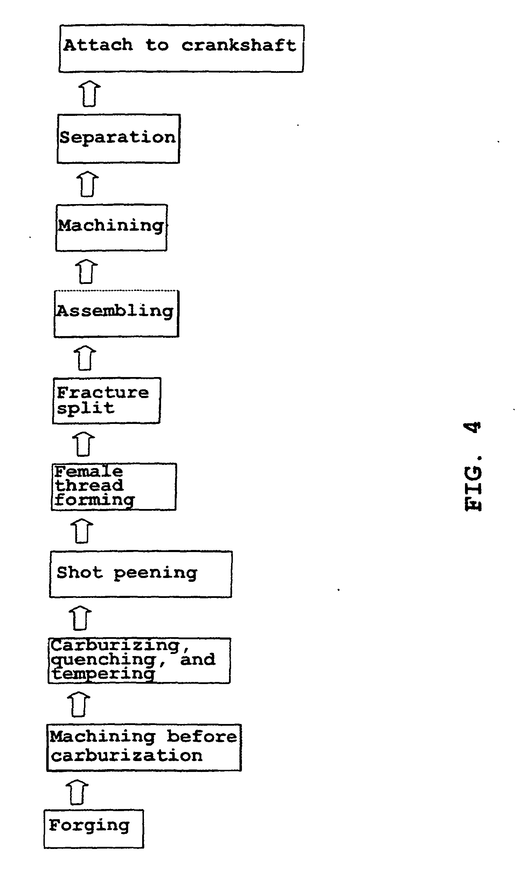

FIGs. 1 to 4 explain a fracture split constitution of a connecting rod as an embodiment. FIG. 1 shows the big end, partially in section, of the connecting rod. FIG. 2 shows the big end in the state of a half-finished product. FIG. 3 shows the section III-III of FIG. 2 that is the part of the fracture-split big end. FIG. 4 is a diagram of producing the connecting rod.

A connecting rod 1 in this embodiment is of a nut-less type made by forging or casting. The small end for attaching a piston pin (not shown) is formed integrally with one end of a main part 1 a of the connecting rod 1. A big end 1 b is formed integrally with the other end of the main part 1 a for attaching a crankpin (not shown). The big end 1b has shoulder parts 1c, 1c expanding from the area connected to the main part 1a of the connecting rod 1. A crankpin hole 1d is formed in the center of the big end 1b.

The big end 1b is first formed as a single part having a rod part 2 and a cap part 3. The entire connecting rod including the big end 1b is subjected to a case hardening process in the steps of carburization, quenching, and tempering. Then the big end 1b is fracture split along the predetermined fracture line A into the rod part 2 and the cap part 3. The rod part 2 and the cap part 3, in the state of their fracture surfaces positioned to each other, are joined together securely with bolts 4, 4.

The shoulder parts 1c of the rod part 2 are respectively bored with a bolt insertion hole 2a, 2a of a diameter slightly greater than the outside diameter of the joining bolt 4. Each of the bolt insertion holes 2a in the cap part 3 is coaxially provided with a female thread hole 3a extending over its bottom part 3b. The rod part 2 and the cap part 3 are joined together with the bolts 4 screwed into the female thread holes 3a.

The bolt insertion hole 2a extends in the vicinity of and at right angles to the axis of the crankpin hole 1d. In other words, the wall thickness W1 between the bolt insertion hole 2a and the inside round surface of the crankpin hole 1d is smaller than the wall thickness W2 between the bolt insertion hole 2a and the outside wall 1e of the shoulder part 1c. The wall thickness W2 is determined to stand the combustion pressure of the engine. In this way, dimensions in the shoulder part of the big end 1b can be reduced and so its weight can be reduced.

The inside round surface of the crankpin hole 1d is provided with a pair of fracture starting grooves 6, 6 extending in the axial direction. Each of the fracture starting grooves 6 is made by machining along the line of intersection between the inside round surface and the predetermined fracture surface A of the rod part 2 and the cap part 3 of the big end 1b.

The connecting rod 1 is made of carbon steel or case hardening steel and subjected to a surface hardening treatment in steps of carburization, quenching, and tempering without applying a carbon preventing treatment at least to the big end 1b. As a result, a hardened surface layer 5 of a thickness T of about 0. 8 mm to 1.0 mm and higher carbon content, due to the carburization, than the original base metal is formed around the peripheral surface of the big end 1b. The hardened surface layer 5 is formed on all the inside round surfaces of the crankpin hole 1d and the bolt holes 2a, and the outside surface of the big end 1b. In this way, the hardened surface layer 5 of the big end 1b is high in brittleness and shows flat grain boundary fracture surfaces when separated by fracture.

On the other hand, the interior 7 surrounded with the hardened surface layer 5 of the big end 1b remains the base metal without any change in its chemical composition before being subjected to the surface hardening treatment. The interior 7 without increase in carbon content is less brittle in comparison with the hardened surface layer 5 and exhibits a microscopic elongation fracture surfaces caused by the separation.

The wall thickness W1 between the bolt insertion hole 2a and the crankpin hole 1d on the fracture-split surface of the big end 1b is smaller than the total hardened depth (T x 2). The wall thickness W2 between the bolt insertion hole 2a and the outside wall 1e of the shoulder part 1c is greater than the total hardened depth (T x 2). In this way, the interior 7, remaining the base metal without being impregnated with carbon, is left outside the bolt insertion hole 2a of the big end 1 b.

The rod part 2 and the cap part 3 fracture-separated from each other are positioned as their elongation fracture surfaces are crushed by the first assembly work, so that irregular surfaces are produced as the retention of the position for the assembly work for the second time and later.

The above embodiment of a method of producing the connecting rod is described below in reference to the process diagram shown in FIG. 4.

A half-finished work of the connecting rod 1 is made by forging. Here, the rod part 2 and the cap par 3 of the big end 1b are formed as a single part. Both of the shoulder parts 1c and the bolt insertion holes 2a, and the fracture starting grooves 6 in the inside round surface of the crankpin hole 1d are formed by machining before carburization.

In this state, the connecting rod 1 undergoes a surface hardening treatment in steps of carburization, quenching, and tempering to be produced with a hardened surface layer 5 of an intended depth T on the outside surface of the big end 1b, and the interior 7 is left, remaining the base metal without impregnation of carbon, inside the hardened surface layer 5. Then, the connecting rod 1 undergoes a shot peening process, and female thread hole 3a is formed by the insertion of a thread tool inside the bolt insertion holes 2a.

Next, the big end 1b is divided with a jig into the rod part 2 and the cap part 3. The separation is made for example by inserting a radially expandable sliders inside the crankpin hole 1d of the big end 1b and driving a wedge between the sliders.

The fracture-separated surfaces of the hardened surface layer 5 of the rod part 2 and the cap part 3 produced by the separation exhibit grain boundary fracture surfaces, and the separated surfaces of the interior 7 of the base metal exhibit elongation fracture surfaces. Both parts are positioned to each other using their respective elongation fracture surfaces and tightened together by means of bolts 4, 4. By the first tightening work, both of the elongation fracture surfaces are crushed to be irregular and serve as the retention of positioning both parts for the second time and later assembly work. Finish machining is performed in the state of both of the parts put together. After that, the cap part 3 is removed from the rod part 2, and the big end 1b is attached again to the crankshaft.

According to the embodiment described above, since the hardened surface layer 5 is produced by the surface hardening treatment on the outside surface of the big end 1b of the connecting rod 1, the brittleness of the outside surface increases with the carburization and quenching, and the grooves 6 work effectively as the fracture starting points at the time of separation.

On the other hand, since the interior 7, remaining the base metal before undergoing the surface hardening treatment and being less brittle than the hardened surface layer 5, is left in part of the big end 1b surrounded with the hardened surface layer 5, microscopic elongation fracture surfaces are produced when the interior 7 is split by fracture. The assembly work of the rod part 2 and the cap part 3 for the second time and later is made with good accuracy by the reassembly work of the two parts using the elongation fracture surfaces. As a result, it is possible to reduce wear and seizure of the big end and output power loss after the assemble with the crankshaft, and to reduce the production cost in comparison with the conventional arrangement by making it unnecessary to make plural separation assisting holes.

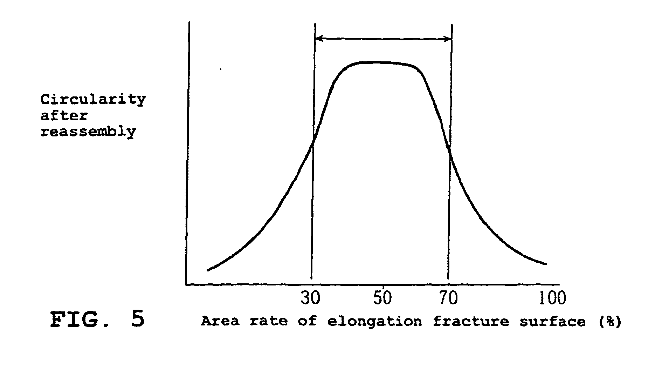

Here, as shown in FIG. 5, the area rate of the elongation fracture surface in the fracture split surface to the total fracture surface is preferably set to the range of 30 % to 70 %. Setting to that range can improve the circular accuracy at the time of re-assembly.

According to this embodiment, since the surface hardening treatment is applied to the entire big end 1b without applying carbon preventing treatment, it is possible to make less uneven the distribution of residual stress in the big end 1b. As a result, deformation of the crankpin hole 1d on the cap part 3 side is restricted at the time of dividing the big end 1b into the rod part 2 and cap part 3. Therefore, circular accuracy after assembling is prevented from lowering and the problem of impossibility of assembling can be avoided.

The hardened surface layer 5 of the big end 1b exhibits grain boundary fracture surfaces produced by the separation, and the interior 7 of the base metal exhibits elongation fracture surfaces. Therefore, the hardened surface layer can improve the function as the fracture starting point at the time of separation, improve the accuracy of positioning the rod part 2 and the cap part 3, and improve the reproducibility when attaching to the crankshaft.

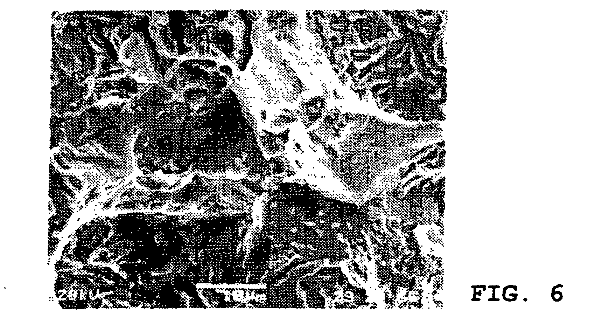

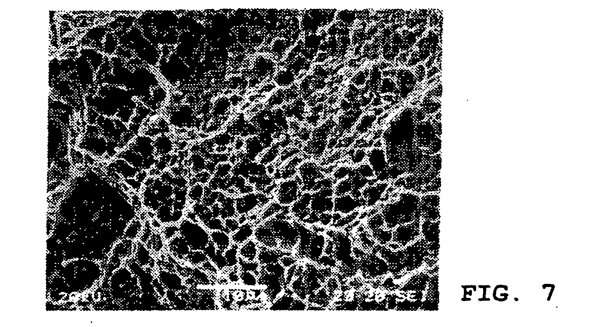

FIGs. 6 and 7 are respectively pictures of the grain boundary fracture surface and the elongation fracture surface. As seen from FIG. 6, grains in the hardened surface layer are separated along the grain boundary, without the grains elongating at right angles to the fracture surface, so that the fracture surface is flat. On the other hand as seen from FIG. 7, grains on the elongation fracture surface in the base metal elongate and separate at right angles to the fracture surface, so that a large number of microscopic irregularities are formed.

Since the wall thickness W2 between the bolt insertion hole 2a and the outside wall 1e of the shoulder part 1c is set to be greater than the total hardened depth (T × 2), the elongation fracture surfaces necessary for enhancing the positioning accuracy can be securely produced.

In this embodiment, since the entire connecting rod is made of carbon steel or case hardening steel, the hardened surface layer 5 can be formed easily by carburization and quenching, while the interior part 7 is securely left in the state of base metal as it is inside the hardened surface layer 5.

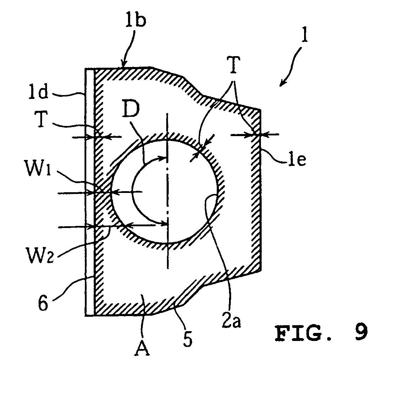

FIG. 9 explains the fracture split constitution of the connecting rod as a further embodiment. In the drawing, the same symbols as those in FIG. 3 show the same or similar parts.

The connecting rod 1 of this embodiment is similar to that of the previous embodiment, with the crankpin hole 1d formed in the center of the big end 1b, and with the bolt insertion holes 2a in both of the shoulder parts 1c.

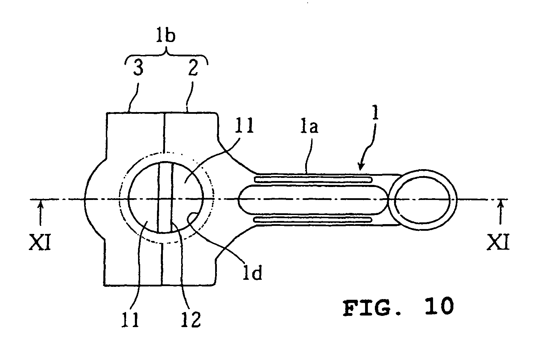

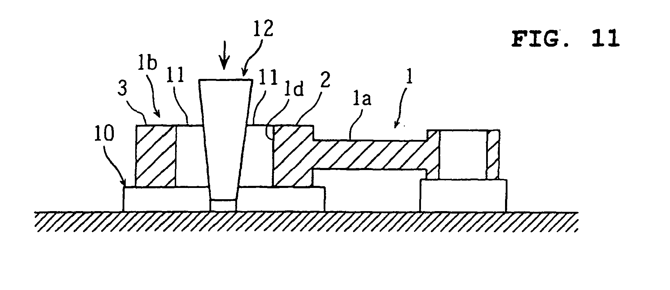

The entire connecting rod 1 including the big end 1b is applied with surface hardening treatment in steps of carburization, quenching, and tempering and the big end 1b is separated by fracture into the rod part 2 and the cap part 3. To describe it more specifically, as shown in FIGs. 10 and 11, the connecting rod 1 is placed on a surface plate 10, sliders 11, 11 that are diametrically movable are inserted in the crankpin hole 1d of the big end 1b, and a wedge 12 is driven in between the sliders 11, 11 so as to separate the big end 1b.

The smallest wall thickness W1 of part of the big end 1b surrounded with the bolt insertion hole 2a and the crankpin hole 1d is set to be thinner than twice the depth T of the hardened surface layer 5 in the fracture split surface 'A'. By setting that the relationship between the smallest wall thickness W1 and the depth T of the hardened surface layer 5 to be W1 < 2T, the entire part of the smallest wall thickness W1 is made higher in hardness than the other part that is not treated by carburization.

The wall thickness W2 of part of the big end 1b surrounded with the bolt insertion hole 2a and the crankpin hole 1d (the 180 degree range D on the crankpin side of the bolt insertion hole 2a) excluding the smallest wall thickness W1 part is set to be greater than twice the depth T of the hardened surface layer 5 in the fracture split surface A. In other words, the thickness W2 is increased to leave the part that is not treated by carburization.

According to the fracture split constitution in this embodiment, the smallest wall thickness W1 between the bolt insertion hole 2a and the crankpin hole 1d of the big end 1b is set to be no greater than twice the depth T of the hardened surface layer 5. As a result, the smallest wall thickness W1 part can be separated by fracture with a relatively small amount of strain in comparison with other parts. Therefore, the smallest wall thickness W1 part serves as the starting point of separation. As a result, double fractures are prevented from occurring so as to prevent engine troubles caused by fractions coming off and further make it possible to perform separation using a simpler jig and prevent cost from increasing.

This embodiment is also arranged that the wall thickness W2 of the part excluding the smallest wall thickness W1 part between the bolt insertion hole 2a and the crankpin hole 1d is no smaller than twice the depth T of the hardened surface layer 5. As a result, the load for fracture-splitting can be concentrated on the smallest wall thickness W1 part so as to securely prevent double fractures from occurring.

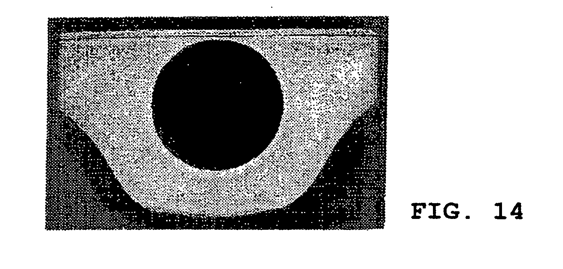

FIG. 14 shows a fracture split surface produced by setting the smallest wall thickness W1 part no greater than twice the thickness T of the hardened surface layer 5, processing with carburization and quenching, and separating by fracture. As is clear from the picture, the split surface is free from double fractures.

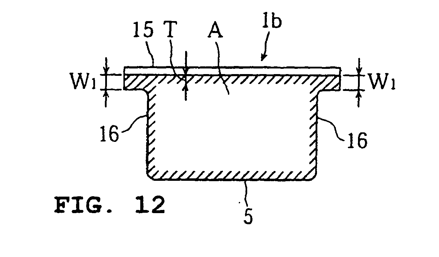

FIG. 12 is explaining the fracture split constitution as a further embodiment, not being part of the present invention;

In this embodiment, the wall thickness W1 of the part between the straight line 15 forming the contour of the fracture split surface A and the right and left curves 16, 16 opposite the straight line 15 of the big end 1b where the wall thickness is the smallest is set to be smaller than twice the depth T of the hardened surface layer 5.

In this embodiment, the smallest thickness W1 of two parts of the big end 1b surrounded with the straight line 15 and the curves 16 forming the contour of the big end 1b where the wall thickness is the smallest is set to be no greater than twice the thickness T of the hardened surface layer 5. Therefore, it is possible to split by fracture with the smallest thickness W1 part as a starting point, prevent double fractures from occurring, and prevent cost from increasing.

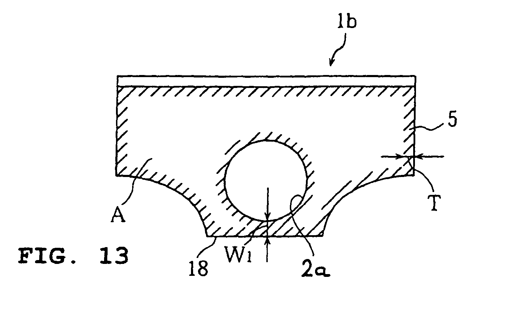

FIG. 13 is explaining the fracture split constitution as a further embodiment.

In this embodiment, the wall thickness W1 of the smallest wall thickness part of the part surrounded with the bolt hole 17 and the outside end surface 18 of the big end 1b is set to be no greater than twice the depth T of the hardened surface layer 5.

Also in this embodiment, since the smallest wall thickness W1 between the bolt hole 17 and the outside end surface 18 is made no greater than twice the thickness T of the hardened surface layer 5, the same effect can be obtained as the above embodiment. That is, the separation occurs starting from the part of the smallest wall thickness W1.

In short, to provide a fracture split constitution of a connecting rod that makes it possible to improve accuracy of positioning fracture split surfaces to each other, prevent the cap part from deforming at the time of splitting, and improve attachment accuracy without increasing production cost, the above description discloses a fracture split constitution of a connecting rod that a surface hardening treatment is applied to the big end made up of integrally formed rod part and cap part, the big end is fracture split into the rod part and the cap part, and the rod part and the cap part are joined together by means of bolts in the state of the fracture split surfaces matching each other in position, wherein the hardened surface layer is formed on the fracture split surfaces of the big end and on the inside surfaces of the bolt insertion holes of the big end, and at least part of the big end surrounded with the hardened surface layer remains in the state before being subjected to the surface hardening treatment, or in the state of base metal.

Namely the description above discloses an embodiment of a fracture split constitution of a connecting rod that a surface hardening treatment is applied to the big end made up of integrally formed rod part and cap part, the big end is fracture split into the rod part and the cap part, and the rod part and the cap part are joined together by means of bolts in the state of the fracture split surfaces being positioned to each other, wherein the hardened surface layer is formed on the fracture split surfaces of the big end and on the inside surfaces of the bolt insertion holes of the big end, and at least part of the big end surrounded with the hardened surface layer remains in the state before being subjected to the surface hardening treatment, or in the state of base metal. With the fracture split constitution of a connecting rod of this embodiment, the hardened surface layer is formed on the fracture split surfaces of the big end and on the inside surfaces of the bolt insertion holes of the big end, and at least part of the big end surrounded with the hardened surface layer remains in the state before being subjected to the surface hardening treatment, or in the state of base metal. Therefore, the outside surface of the big end is hardened to be more brittle. As a result, while the broken apart surface shape itself is flat as shown in the microscopic picture of FIG. 6, it works effectively as the separation start point, so that the separation is performed reliably.

On the other hand, since part of the big end surrounded with the hardened surface layer remains base metal having no hardened layer, the part is lower in brittleness than the outside surface and so a microscopic elongation fracture surface is produced at the time of breaking apart. That is to say as shown in FIG. 7, the fracture split surfaces appears to have been produced after elongation in the direction at right angles to the broken-apart surfaces and then breaks apart from within the grains. When the elongation fracture surfaces formed as described above are mated with each other and bolt-tightened together, the elongated parts are crushed into a shape that can retain the position for assembly for the second time and later. In this way, it is possible to position the rod part and the cap part in highly accurate and reproducible manner. As a result, it is possible to improve the circular accuracy of the big end, to reduce wear and seizure of the big end and output power loss after the assemble with the crankshaft, and to reduce the production cost in comparison with the conventional arrangement using plural separation assisting holes.

The embodiment discussed directly above may be further improved in that the hardened surface layer on the fracture split surfaces of the big end and on the inside surfaces of the bolt insertion holes of the big end is produced by case hardening followed by tempering without applying carbon preventing treatment to those surfaces.

As the hardened surface layer on the fracture split surfaces of the big end and on the inside surfaces of the bolt insertion holes of the big end is produced by case hardening followed by tempering without applying carbon preventing treatment to those surfaces, it is possible to form the hardened surface layer only on the outside fracture surface of the big end and on the inside surfaces of the bolt holes while leaving the interior the base metal as it is. It is also possible to make less uneven the distribution of the residual stress in the big end. As a result, deformation of the crankpin hole of the cap part side is restricted at the time of separating the rod part from the cap part. Therefore, circular accuracy in the state of assembly is prevented from lowering and the problem of impossibility of assembling can be avoided.

It is further beneficial if the hardened surface layer is higher in carbon content than the base metal.

Since the carbon content in the hardened surface layer on the outside and inside surfaces mentioned above is increased, brittleness of the hardened surface layer is enhanced, so that the separation is made more reliable.

It would also be beneficial if the hardened surface layer has grain boundary fracture surfaces caused by the separation and at least part of the big end surrounded with the hardened surface layer has elongation fracture surfaces caused by the separation.

Since the hardened surface layer has grain boundary fracture surfaces caused by the fracture split and the interior of the hardened surface layer has elongation fracture surfaces, the function of the fracture starting point at the time of separation is improved, the accuracy of positioning the rod part and the cap part is improved, and the assembling work of the crankshaft is made more reproducible.

It would be further preferable if the entire connecting rod is made of carbon steel or case hardening steel.

Since the entire connecting rod is made of carbon steel or case hardening steel, it is possible to form easily the hardened surface layer by carburization and quenching while forming securely an elongation fracture surfaces inside the hardened surface layer.

The description above further discloses an embodiment of a fracture split constitution of a connecting rod that a surface hardening treatment is applied to the big end made up of integrally formed rod part and cap part, the big end is fracture split into the rod part and the cap part, and the rod part and the cap part are joined together by means of bolts in the state of the fracture split surfaces being positioned to each other, wherein part of the smallest wall thickness in the fracture split surfaces of the big end surrounded with the bolt holes and the crankpin hole is thinner than twice the depth of the hardened surface layer.

Since the smallest wall thickness part between the bolt hole and the crankpin hole of the big end is made thinner than twice the thickness of the hardened surface layer, the smallest wall thickness part can be fracture split with a smaller amount of strain in comparison with other parts. Therefore, separation occurs with the smallest wall thickness part as the starting point. As a result, it is possible to prevent double fractures from occurring, prevent engine troubles caused by fractions coming off from occurring, perform separation using a simpler jig, and prevent cost from increasing.

This further embodiment may be further improved in that part of the big end excluding the smallest wall thickness part surrounded with the bolt holes and the crankpin hole is thicker than twice the depth of the hardened surface layer.

In this embodiment, if part of the area between the bolt hole and the crankpin hole excluding the smallest wall thickness part is made thicker than twice the thickness of the hardened surface layer, it is possible to concentrate the load for breaking apart on the smallest wall thickness part, so that double fractures are reliably prevented from occurring.

The description above still further discloses an embodiment of a fracture split constitution of a connecting rod that a surface hardening treatment is applied to the big end made up of integrally formed rod part and cap part, the big end is fracture split into the rod part and the cap part, and the rod part and the cap part are joined together by means of bolts in the state of the fracture split surfaces being positioned to each other, wherein at least one set of parts thinner than twice the hardened surface layer produced by the surface hardening treatment are present in the area surrounded with a straight line or a curved line that forms the contour of the fracture split surfaces of the big end.

If at least one set of parts thinner than twice the depth of the hardened surface layer are formed in the part surrounded with a straight line or a curved line that contours the big end, the big end can be fracture split with the thin wall part as the starting point of fracture. Therefore, it is possible to obtain the same effects as the invention according to claim 6, to prevent double fractures from occurring and restrict cost from increasing.

The description above still further discloses an embodiment of a fracture split constitution of a connecting rod that a surface hardening treatment is applied to the big end made up of integrally formed rod part and cap part, the big end is fracture split into the rod part and the cap part, and the rod part and the cap part are joined together by means of bolts in the state of the fracture split surfaces being positioned to each other, wherein part of the smallest wall thickness in the fracture split surfaces of the big end surrounded with the bolt holes and the crankpin hole is thinner than twice the depth of the hardened surface layer.

Since the smallest wall thickness part between the bolt hole and the outside end surface is made thinner than twice the depth of the hardened surface layer, separation occurs from the starting point, the smallest wall thickness part.

## Claims

1. Connecting rod having a surface hardened big end (1b) with a rod part (2) and a cap part (3), at least one bolt insertion hole (2a) formed in the big end (1b) for joining said rod part (2) and said cap part (3) by means of a bolt (4), said rod part (2) and said cap part (3) being joined with each other at respective fracture split surfaces, wherein at least an inner part (7) of the big end (1 b) is unhardened **characterised in that** a wall thickness (W1) between a surface of the bolt insertion hole (2a) and an outside surface of the big end is set smaller than twice a thickness (T) of the hardened surface layer (5), said outside surface being either a surface of a crankpin hole (1d) formed in the big end (1 b) or an outside wall of a shoulder part (1 e) of the big end (1 b).

2. Connecting rod according to claim 1, **characterized in that** the hardened surface layers (5) are formed on an inside round surface of the bolt insertion hole (2a) and on the outside surface of the big end (1 b).

3. Connecting rod according to at least one of the preceding claim, **characterized in that** a wall thickness (W2) between the bolt insertion hole (2a) and the outside wall of the shoulder part (1 e) of the big end (1 b) is set larger than twice the thickness (T) of the hardened surface layer (5).

4. Connecting rod according to at least one of the preceding claims 1 to 2, **characterized in that** a wall thickness (W2) between the bolt insertion hole (2a) and the surface of the crankpin hole (1 d) is set larger than twice the thickness (T) of the hardened surface layer (5).

5. Connecting rod according to at least one of the preceding claims 1 to 4, **characterized by** at least one fracture starting groove (6), wherein said fracture starting groove (6,6) is provided along a predetermined fracture surface (A) of the rod part (2) and the cap part (3).

6. Connecting rod according to at least one of the preceding claims 1 to 5, **characterized in that** the hardened surface layer (5) is produced by case hardening followed by tempering without applying carbon preventing treatment to those surfaces.

7. Connecting rod according to at least one of the preceding claims 1 to 6, **characterized in that** a carbon content of the hardened surface layer (5) is greater than a carbon content of the base metal.

8. Connecting rod according to at least one of the preceding claims 1 to 7, **characterized in that** the hardened surface layer (5) has grain boundary fracture surfaces caused by the fracture split and at least part of the big end (1 b) with the hardened surface layer (5) has elongation fracture surfaces caused by the fracture split.

9. Connecting rod according to at least one of the preceding claims 1 to 8, **characterized in that** the entire connecting rod (1) is made of carbon steel or case hardening steel.

10. Engine, in particular internal combustion engine, comprising at least one connecting rod (1) according to any of the preceding claims.

11. Method of producing a connecting rod (1), wherein a big end (1b) is formed as a single part having a rod part (2) and a cap part (3), is subjected to a hardening process forming a hardened surface layer (5), and is fracture split along a predetermined fracture line (A) into the rod part (2) and the cap part (3), and wherein the rod part (2) and the cap part (3), in the state of their fracture surfaces positioned to each other, are joined together, wherein at least a part (7) of the big end (1 b) surrounded with a hardened surface layer (5) remains in a state before being subjected to the hardening treatment or in a state of a base metal of the big end (1b) and wherein a wall thickness (W1) between a surface of a bolt insertion hole (2a) , formed in the big end (1b) for joining said rod part (2) and said cap part (3), and an outside surface of the big end (1b) is set smaller than twice a thickness (T) of the hardened surface layer (5), said outside surface being either a surface of a crankpin hole (1d) formed in the big end (1b) or an outside wall of a shoulder part (1e) of the big end (1b).

## Patentansprüche

1. Pleuelstange mit einem oberflächengehärteten großen Ende (1 b) mit einem Stangenteil (2) und einem Kappenteil (3), zumindest einer Schraubeneinsetzbohrung (2a), gebildet in dem großen Ende (1 b) zum Verbinden des Stangenteils (2) und des Kappenteils (3) mittels einer Schraube (4), wobei das Stangenteil (2) und das Kappenteil (3) miteinander an jeweiligen Bruchtrennoberflächen verbunden sind, wobei zumindest ein innerer Teil (7) des großen Endes (1 b) nicht gehärtet ist, **dadurch gekennzeichnet, dass** eine Wanddicke (W1) zwischen einer Oberfläche der Schraubeneinsetzbohrung (2a) und einer äußeren Oberfläche des großen Endes kleiner als das Doppelte einer Dicke (T) der gehärteten Oberflächenschicht (5) festgelegt ist, wobei die äußere Oberfläche entweder eine Oberfläche der Kurbelbolzenbohrung (1d), gebildet in dem großen Ende (1b), oder eine Außenwand eines Schulterteils (1 a) des großen Endes (1 b) ist.

2. Pleuelstange nach Anspruch 1, **dadurch gekennzeichnet, dass** die gehärtete Oberflächenschichten (5) auf einer inneren runden Oberfläche der Schraubeneinsetzbohrung (2a) und auf der äußeren Oberfläche des großen Endes (1 b) gebildet sind.

3. Pleuelstange nach zumindest einem der vorhergehenden Ansprüche, **dadurch gekennzeichnet, dass** eine Wanddicke (W2) zwischen der Schraubeneinsetzbohrung (2a) und der äußeren Wand des Schulterteils (1e) des großen Endes (1 b) größer als das Doppelte der Dicke (T) der gehärteten Oberflächenschicht (5) festgelegt ist.

4. Pleuelstange nach zumindest einem der vorhergehenden Ansprüche 1 bis 2, **dadurch gekennzeichnet, dass** eine Wanddicke (W2) zwischen der Schraubeneinsetzbohrung (2a) und der Oberfläche der Kurbelbolzenbohrung (1d) größer als das Doppelte der Dicke (T) der gehärteten Oberflächenschicht (5) festgelegt ist.

5. Pleuelstange nach zumindest einem der vorhergehenden Ansprüche 1 bis 4, **gekennzeichnet durch** zumindest eine Bruchbeginn- Nut (6), wobei die Bruchbeginn- Nut (6, 6) entlang einer vorbestimmten Bruchoberfläche (A) des Stangenteils (2) und des Kappenteils (3) vorgesehen ist.

6. Pleuelstange nach zumindest einem der vorhergehenden Ansprüche 1 bis 5, **dadurch gekennzeichnet, dass** die gehärtete Oberflächenschicht (5) durch Einsatzhärten, gefolgt von Tempern ohne Anwenden einer Kohlenstoffverhinderungsbehandlung auf diesen Oberflächen erzeugt wird.

7. Pleuelstange nach zumindest einem der vorhergehenden Ansprüche 1 bis 6, **dadurch gekennzeichnet, dass** ein Kohlenstoffgehalt der gehärteten Oberflächenschicht (5) größer als ein Kohlenstoffgehalt des Basismetalls ist.

8. Pleuelstange nach zumindest einem der vorhergehenden Ansprüche 1 bis 7, **dadurch gekennzeichnet, dass** die gehärtete Oberflächenschicht (5) Korngrenzen-Bruchoberflächen, verursacht durch die Bruchtrennung, hat und zumindest ein Teil des großen Endes (1 b) mit der gehärteten Oberflächenschicht (5) Dehnungsbruchoberflächen, verursacht durch die Bruchtrennung, hat.

9. Pleuelstange nach zumindest einem der vorhergehenden Ansprüche 1 bis 8, **dadurch gekennzeichnet, dass** die gesamte Pleuelstange (1) aus Kohlenstoffstahl oder einsatzgehärtetem Stahl hergestellt ist.

10. Motor, insbesondere eine Brennkraftmaschine, aufweisend zumindest eine Pleuelstange (1) nach einem der vorhergehenden Ansprüche.

11. Verfahren zum Herstellen einer Pleuelstange (1), wobei das große Ende (1 b), als ein einzelnes Teil mit einem Stangenteil (2) und einem Kappenteil (3), einem Härteverfahren unterworfen wird, das eine gehärtete Oberflächenschicht (5) ausbildet und entlang einer vorbestimmten Bruchlinie (A) in dem Stangenteil (2) und dem Kappenteil (3) bruchgeteilt wird, und wobei das Stangenteil (2) und das Kappenteil (3) in dem Zustand, in dem ihre Bruchoberflächen zueinander positioniert sind, miteinander verbunden werden, wobei zumindest ein Teil (7) des großen Endes (1 b), umgeben mit einer gehärteten Oberflächenschicht (5), in einem Zustand vor der Härtebehandlung verbleibt, oder in einem Zustand eines Basismetalls des großen Endes (1b) verbleibt und wobei eine Wanddicke (W1) zwischen einer Oberfläche einer Schraubeneinsetzbohrung (2a), gebildet in dem großen Ende (1 b) zum Verbinden des Stangenteils (2) und des Kappenteils (3), und eine äußere Oberfläche des großen Endes (1 b) kleiner als das Doppelte einer Dicke (T) der gehärteten Oberflächenschicht (5) festgelegt wird, wobei die äußere Oberfläche entweder eine Oberfläche einer Kurbelbolzenbohrung (1 d), gebildet in dem großen Ende (1b), oder eine Außenwand eines Schulterteils (1e) des großen Endes (1 b) wird.

## Revendications

1. Bielle ayant une tête de bielle (1b) durcie en surface avec une partie de tige (2) et une partie de chapeau (3), au moins un trou d'insertion de boulon (2a) formé dans la tête de bielle (1b) pour assembler ladite partie de tige (2) et ladite partie de chapeau (3) au moyen d'un boulon (4), ladite partie de tige (2) et ladite partie de chapeau (3) étant assemblées entre elles au niveau des surfaces fendues fracturées respectives, dans laquelle au moins une partie interne (7) de la tête de bielle (1b) est non durcie, **caractérisée en ce qu'**une épaisseur de paroi (W1) entre une surface du trou d'insertion de boulon (2a) et une surface externe de la tête de bielle est plus petite que deux fois l'épaisseur (T) de la couche de surface durcie (5), ladite surface externe étant une surface d'un trou de maneton (1d) formé dans la tête de bielle (1b) ou une paroi externe d'une partie d'épaulement (le) de la tête de bielle (1b).

2. Bielle selon la revendication 1, **caractérisée en ce que** les couches de surface durcies (5) sont formées sur une surface ronde interne du trou d'insertion de boulon (2a) et sur la surface externe de la tête de bielle (1b).

3. Bielle selon au moins l'une des revendications précédentes, **caractérisée en ce qu'**une épaisseur de paroi (W2) entre le trou d'insertion de boulon (2a) et la paroi externe de la partie d'épaulement (le) de la tête de bielle (1b) est plus grande que deux fois l'épaisseur (T) de la couche de surface durcie (5).

4. Bielle selon au moins l'une des revendications 1 à 2 précédentes, **caractérisée en ce qu'**une épaisseur de paroi (W2) entre le trou d'insertion de boulon (2a) et la surface du trou de maneton (1d) est plus grande que deux fois l'épaisseur (T) de la couche de surface durcie (5).

5. Bielle selon au moins l'une des revendications 1 à 4 précédentes, **caractérisée par** au moins une rainure de départ de fracture (6), dans laquelle ladite rainure de départ de fracture (6, 6) est prévue le long d'une surface de fracture prédéterminée (A) de la partie de tige (2) et de la partie de capuchon (3).

6. Bielle selon au moins l'une des revendications 1 à 5 précédentes, **caractérisée en ce que** la couche de surface durcie (5) est produite par durcissement superficiel suivi par le revenu sans appliquer de traitement anti-carbone sur ces surfaces.

7. Bielle selon l'une des revendications 1 à 6 précédentes, **caractérisée en ce qu'**une teneur en carbone de la couche de surface durcie (5) est supérieure à une teneur en carbone du métal de base.

8. Bielle selon au moins l'une des revendications 1 à 7 précédentes, **caractérisée en ce que** la couche de surface durcie (5) a des surfaces de fissure entre grains provoquées par la fente de fracture et au moins une partie de la tête de bielle (1b) avec la couche de surface durcie (5) a des surfaces de fracture à l'allongement provoquées par la fente de fracture.

9. Bielle selon l'une des revendications 1 à 8 précédentes, **caractérisée en ce que** toute la bielle (1) est réalisée avec de l'acier au carbone ou de l'acier cémenté.

10. Moteur, en particulier un moteur à combustion interne, comprenant au moins une bielle (1) selon l'une quelconque des revendications précédentes.

11. Procédé pour produire une bielle (1), dans lequel une tête de bielle (1b) est formée comme une partie unique ayant une partie de tige (2) et une partie de chapeau (3), est soumise à un procédé de durcissement formant une couche de surface durcie (5) et est fendue par fracture le long d'une ligne de fracture prédéterminée (A) dans la partie de tige (2) et la partie de chapeau (3), et dans lequel la partie de tige (2) et la partie de chapeau (3), dans l'état de leurs surfaces de fracture positionnées l'une par rapport à l'autre, sont assemblées, dans lequel au moins une partie (7) de la tête de bielle (1b) entourée avec une couche de surface durcie (5) reste dans un état avant d'être soumise au traitement de durcissement ou dans un état d'un métal de base de la tête de bielle (1b) et dans lequel une épaisseur de paroi (W1) entre une surface d'un trou d'insertion de boulon (2a), formée dans la tête de bielle (1b) pour assembler ladite partie de tige (2) et ladite partie de chapeau (3), et une surface externe de la tête de bielle (1) est plus petite que deux fois l'épaisseur (T) de la couche de surface durcie (5), ladite surface externe étant une surface d'un trou de maneton (1d) formé dans la tête de bielle (1b) ou une paroi externe d'une partie d'épaulement (le) de la tête de bielle (1b).
